# EUROPEAN PATENT APPLICATION

(11) **EP 2 660 628 A1**
(43) Date of publication of application: **06.11.2013**
(21) Application number: 11853351.2
(22) Date of filing: 13.05.2011
(51) Int. Cl.: G01T 1/00

(54) **NUCLIDE IDENTIFICATION DEVICE**

(30) Priority: 31.12.2010 CN 201010624246
(71) Applicant: Nuctech Company Limited, Haidian District, Beijing 100084 (CN)
(72) Inventor: LI, Yue, Beijing 100084 (CN); WANG, Zhenhua, Beijing 100084 (CN); PU, Zhongqi, Beijing 100084 (CN); XUE, Xin, Beijing 100084 (CN); YANG, Xiaohui, Beijing 100084 (CN)
(74) Representative: Stöckeler, Ferdinand
(86) International application number: PCT/CN2011/074040
(87) International publication number: WO 2012/088815

(57) **Abstract**

The present invention discloses a nuclide identification device, comprising: an upper casing portion; a lower casing portion, detachably combined with the upper casing portion to form a cavity; and a key circuit portion for performing nuclide identification, housed in the cavity and positioned between the upper casing portion and the lower casing portion, wherein a gap between the upper casing portion and the lower casing portion is sealed by a first waterproof structure. Compared with the prior art, the present nuclide identification device is capable of using in environment requiring to be waterproof and dustproof, so as to make a detection on the radioactive material in the environment.

## Description

The present application claims the benefit of Chinese Patent Application No. 201010624246.8 filed on December 31, 2010 in the State Intellectual Property Office of China, the disclosure of which is incorporated herein by reference.

### BACKGROUND OF THE INVENTION

### 1. Field of the Invention

The present invention relates to the technical field of nuclide identification, and more particularly, to a device for nuclide identification.

### 2. Description of the Related Art

Characteristics of nuclide identification devices lie in their functions of detection, alarm and identification. They are often used during radioactive security inspection procedures of the field such as airport, seaport, customs, and important publics, and lie in the second stage of the whole inspection procedure. One key point of the nuclide identification devices is to rapidly check the inspection result given out by a passage type radioactive material detection system which lies in the first stage of the whole inspection procedure, and to achieve the determination of the intensity and identification of the nuclide. However, taking into consideration that the nuclide identification devices are intended to use in a variety of occasions, there are specific requirements on waterproof, dustproof and shockproof and so on.

### SUMMARY OF THE INVENTION

Therefore, it is an object of the present invention to solve at least one aspect of the above problems and defects in the prior art.

Accordingly, one object of the present invention is to provide a nuclide identification device having waterproof design.

Another object of the present invention is to provide a nuclide identification device having dustproof design.

A further object of the present invention is to provide a nuclide identification device having shockproof design.

In accordance with one aspect of the present invention, a nuclide identification device is provided, comprising: an upper casing portion; a lower casing portion, detachably combined with the upper casing portion to form a cavity; and a key circuit portion for performing nuclide identification, housed in the cavity and positioned between the upper casing portion and the lower casing portion, wherein a gap between the upper casing portion and the lower casing portion is sealed by a first waterproof structure.

In accordance with one embodiment, the upper casing portion is provided with an input-output device and a handle, and the lower casing portion comprises a battery, a detector/detectors, a signal amplifier and a battery door for allowing to replace the battery.

In accordance with another embodiment, the input-output device comprises a display, a switching keyboard, a power switch, a communication interface, a communication interface door for the communication interface and an alarm light.

In accordance with another embodiment, a gap between the upper casing portion and at least one of the input-output device and the handle is sealed by a second waterproof structure, and at least one of a gap between the communication interface door and the upper casing portion and a gap between the battery door and the lower casing portion is sealed by a third waterproof structure.

In accordance with another embodiment, at least one of the first waterproof structure, the second waterproof structure and the third waterproof structure is made from one of foam cotton, high foam rubber and silicon rubber or any combination thereof.

In accordance with another embodiment, the high foam rubber is one of cylindrical closed cell foam ethylene propylene terpolymer and polyethylene foamed cotton, or any combination thereof.

In accordance with another embodiment, at least one flange is provided at a position where at least one of the input-output device and the upper casing portion is sealed, or at a position where at least one of the handle and the upper casing portion is sealed.

In accordance with another embodiment, a reinforcing device is provided at a connection between the handle and the upper casing device.

In accordance with another embodiment, the reinforcing device is a backing plate which is made of metal, stainless steel or plastics.

In accordance with another embodiment, the gap between the upper casing portion and the lower casing portion is sealed by a protrusion-slot arrangement, and the first waterproof structure is located in the slot to seal the gap between the protrusion and the slot.

In accordance with another embodiment, the lower casing portion is provided with at least one shock absorption tank at its bottom.

In accordance with another embodiment, at least one wall of the shock absorption tank is provided with foam cotton.

Compared with the prior art, since in all the above embodiments the waterproof structures are used to achieve waterproof and dustproof functions and the shock absorption tank is used to damp shock, the nuclide identification device in the present invention has an improvement on terms of waterproof, dustproof and shockproof performances, thus being applicable in various occasions to detect the radioactive materials and identify nuclide.

### BRIEF DESCRIPTION OF THE DRAWINGS

These aspects and/or other aspects as well as advantages of the present invention will become obvious and readily understood from the description of the preferred embodiments of the present invention in conjunction with the accompanying drawings below, in which
Fig. 1 is a perspective view of a nuclide identification device as a whole in one embodiment of the present invention;
Fig. 2 is a schematic sectional view of the nuclide identification device as shown in Fig. 1;
Fig. 3a is an enlarged schematic view at a position a in Fig. 2;
Fig. 3b is an enlarged schematic view at a position b in Fig. 2;
Fig. 3c is an enlarged schematic view at a position c in Fig. 2;
Fig. 3d is an enlarged schematic view at a position d in Fig. 2; and
Fig. 4 is a schematic view showing shock absorption design of the nuclide identification device in accordance with the present invention.

### DETAILED DESCRIPTION OF THE EMBODIMENTS

The specific implementations of the present invention will be described in detail below in conjunction with the following embodiments.

In one embodiment of the present invention, the nuclide identification device is of hand-hold type, but it should be noted that waterproof, dustproof and shockproof designs as described below in the present invention can also be applicable to different types of the nuclide identification devices, rather than being limited to the hand-hold nuclide identification device.

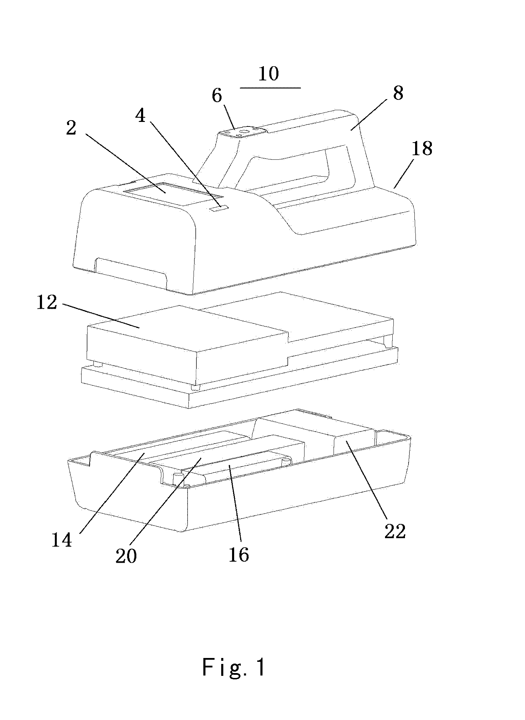

With referring to Figs. 1-2, the hand-hold nuclide identification device 10 of the present invention typically includes an upper casing portion 32, a lower casing portion 34 and a key circuit portion 12. Specifically, the upper casing portion 32 and the lower casing portion 34 can be detachably connected with each other, so as to form a cavity. The key circuit portion 12 can includes a sampling plate, a signal processing plate and a power management plate as well as other relevant components, so as to accomplish the nuclide identification. In order to facilitate installation, a plurality of components needed for the key circuit portion 12 can be installed on a frame portion (not shown), so that the key circuit portion 12 can be separately adjusted and installed. In one embodiment, a fastening device such as threaded screws or bolts can be used to fix the frame portion onto the lower casing portion 34, so that they function to protect and fix the components in the lower casing portion 34 to a certain extent.

In addition, a variety of input-output devices can be provided on the upper casing portion 32 as required, for example, a display 2, a switching keyboard 6, a power switch (not shown), a communication interface 18, a communication interface door 26 for the communication interface 18 and an alarm light 4, and the like. As an example, the display 2 can be a touch screen to simultaneously display and input the information. The communication interface 18 can be used to accomplish the operation, such as to recharge the above described hand-hole nuclide identification device 10, and transmit the data.

The lower casing portion 34 includes a battery 22, detectors 14 and 20, a signal amplifier 16 and a battery door 24 for the battery. The battery 22 can be a rechargeable battery module (for example, lithium battery). This can be replaced through the battery door 24 and be recharged by an external interface (not shown).

The person skilled in the art should be understood that the hand-hold nuclide identification device 10 of the present invention is divided into three parts, i.e., the upper casing portion 32, the lower casing portion 34 and the key circuit portion 12, which includes all of the key components necessary for the nuclide identification device 10. Therefore, the hand-hold nuclide device 10 of the present invention has the advantages of independent external cooperation, convenient debugging, and helpful batch production.

The working principle of the hand-hold nuclide identification device 10 in the present embodiment is: to detect characteristic gamma rays emitted from the radioactive material by the detectors 14 and 20; and finally to display the information such as name, kind and dose of the nuclide (i.e., the radioactive material) onto the display 2 after the gamma rays are analyzed and processed by the respective components in the key circuit portion 12. In accordance with the actual requirements, the nuclide identification device 10 of the present embodiment can incorporate a plurality of functions such as finding out and positioning the radioactive source, dose measurement, dose alarm, and nuclide identification. Further, the present nuclide identification device 10 can identify kinds of the nuclides including particular nuclear material, industrial nuclear source, medical nuclear source and natural radioactive nuclides, and thus can be used in various occasions such as seaport, airport, customs, subways, nuclear power station, scientific research institutions and other important departments.

Since the nuclide identification device 10 in the present embodiment has the above structures, it can be directly carried to a location to be detected upon detecting. An operator can grasp a handle of the nuclide identification device 10, and then hold the nuclide identification device 10 by a single hand. The thumb of the grasping hand can control the switching keyboard 6 on the handle so as to turn on/off the nuclide identification device 10. And then, the corresponding detection operations can be performed, and then it is turned off by the switching keyboard 6 after finishing such detection. Of course, it is possible to turn off the device 10 directly by the power switch on the casing portions. Therefore, the nuclide identification device 10 of the present embodiment is very easy to operate, quick and practical. Alternatively, the nuclide identification device 10 can be set up by the touch screen, so that it can work among three working modes such as dose rate, search for source and nuclide identification.

The present nuclide identification device 10 provides nuclear material detection, alarm and identification means for crisis management and measurement and analysis means of the radioactive nuclide for consequence management, and achieves rapid positioning of the radioactive nuclide.

Various operating platforms can be embedded in the nuclide identification device 10, to simplify the operation thereof. A loudspeaker, an alarm light 4 and a vibrating device and so on are arranged on the casing portions so as to provide and accomplish a plurality of alarm and indication means on terms of sound, light and vibration. Of course, the hand-hold nuclide identification device 10 can be provided with a corresponding radio transceiver, in order to achieve remote control and data transmission in cooperation with the remote monitor software.

The person skilled in the art should understand that the upper and lower casing portions 32 and 34 of the nuclide identification device 10 can be made of the materials such as plastics, which do not block or shutter the rays emitted from the radioactive material. Further, in the present embodiment, since surfaces of the detectors 14 and 20 contacting with the key circuit portion 12 and the battery 22 may at least partly block the rays emitted from the radioactive material, so that the detection structure of the nuclide identification device 10 is interfered. Therefore, it is common to choose the surface which is not in contact with the internal components of the nuclide identification device 10 as a detection surface or an inlet of the radioactive material. Specifically, the detection surface of the present nuclide identification device 10 is a side surface (i.e., a left side surface in Fig. 1) which is opposite to the side surface contacting with the battery. With such design, the user can directly direct the detection surface toward a detection location, and make a corresponding detection.

Of course, the present nuclide identification device 10 may be also provided with a handle 8. In the present embodiment, since the handle 8 is provided with the switching keyboard 6, the handle 8 is secured to the upper casing portion 32 by the fasteners such as the threaded screws. It should be understood that if no elements are arranged onto the handle 8, it can also be integrally formed with the upper casing portion 32.

Taking into consideration that the present nuclide identification device 10 will be used in various different environments, in order to ensure the working efficiency and the normal operation thereof, the nuclide identification device 10 should be designed to be waterproof, dustproof and shockproof.

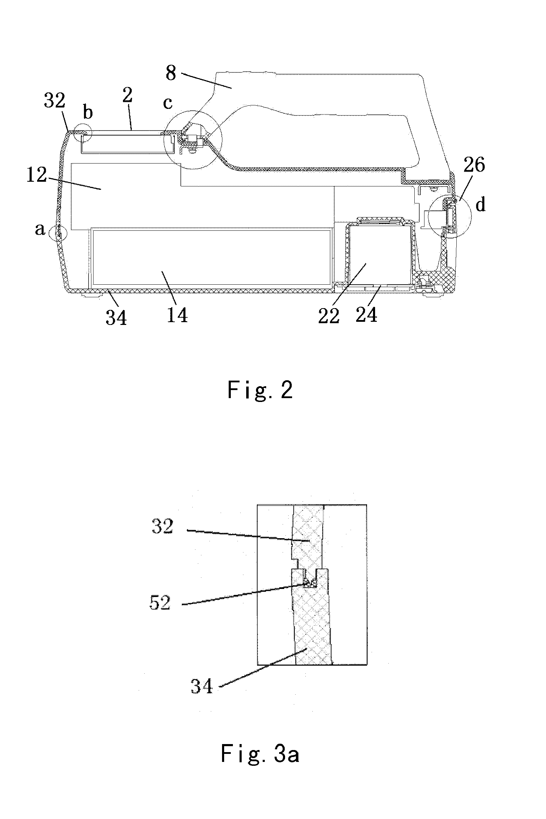

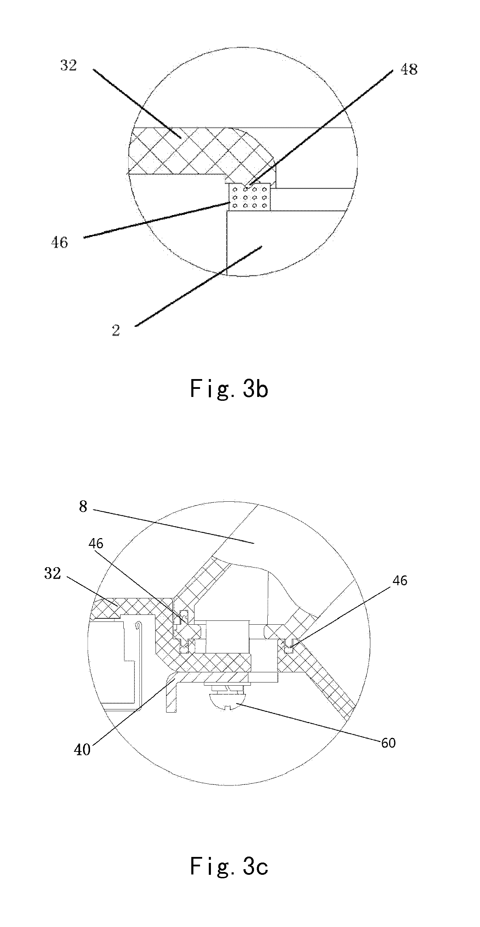

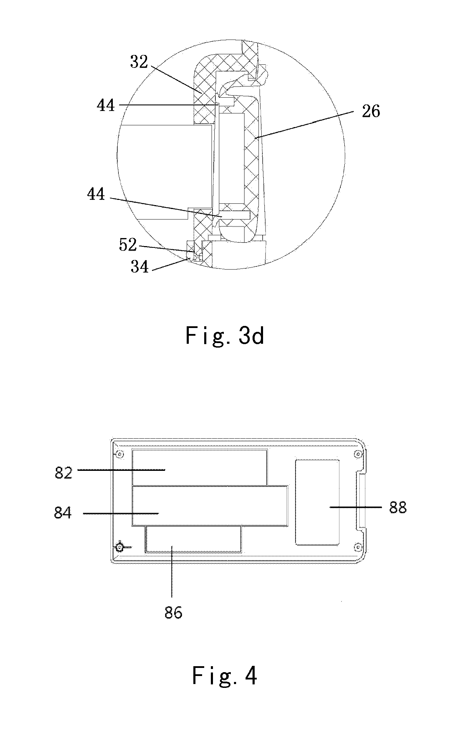

Hereinbelow, the waterproof and dustproof designs of the present nuclide identification device 10 will be described in more detail with reference to Figs. 3a, 3b, 3c and 3d.

It can be seen from the above that the nuclide identification device 10 includes the display 2, the handle 8, the upper casing portion 32, the lower casing portion 34, the communication interface door 26 covering the communication interface 18, and the battery door 24 for allowing the battery 22 to be replaced. All of the gaps among these components should be sealed by the waterproof structure.

Fig. 3a is an enlarged view at a position a of Fig. 2. It can be seen from Fig.3a that the upper casing portion 32 and the lower casing portion 34 are fixed with each other by a means of a protrusion and slot arrangement. In the present embodiment, a protrusion is formed on one end of the upper casing portion 32, and accordingly a slot is formed on one end of the lower casing portion 34. When they are fitted to each other, the protrusion is fitted into the slot, and a gap between the protrusion and the slot is waterproofed and sealed by a first waterproof structure (such as cylindrical foam rubber)52. The cylindrical foam rubber has a relatively large volume in an uncompressed state, while it has a large deformation when being compressed and has a good elasticity. In one embodiment, the cylindrical foam rubber can be selected from one of the closed cell foam ethylene propylene terpolymer and polyethylene foamed cotton or any combination thereof, so as to achieve the waterproof function.

Fig. 3b is an enlarged view at a position b of Fig. 2. It can be seen from Fig. 3b that a gap between the upper casing portion 32 and the display 2 can be sealed by a second waterproof structure 46. In the present embodiment, the second waterproof structure 46 is made of foam cotton. Preferably, in order to enhance the waterproof function, a flange or flanges may be arranged onto at least one of the upper casing portion 32 and the display 2. Specifically, in an example, only the upper casing portion 32 is provided with a flange 48, as shown. Of course, a plurality of flanges 48 may be provided on the upper casing portion 32 from inside to outside, in accordance with the waterproof requirements.

Fig. 3c is an enlarged schematic view at a position c in Fig. 2. It can be seen from Fig. 3c that the handle 8 is fixed on the upper casing portion 32 by a screw 60. Specifically, as shown, the gap between the handle 8 and the upper casing portion 32 is sealed by the second waterproof structure 46. Of course, the flange can be provided as required. In addition, in view of the forces or stress at the connection of the handle 8 to the upper casing portion 32 in the design, the reinforcing device 40 (such as backing plate 40) is used to reinforce it, so as to increase the stressed area and to reduce the deformation of the upper casing portion 32. In the present embodiment, the reinforcing device is the backing plate 40 which is made of metal, stainless steel or plastics.

Fig. 3d is an enlarged schematic view at a position d in Fig. 2. It can be seen from Fig. 3d that it is also sealed at the communication interface door 26 for the communication interface 18 by a third waterproof structure 44. In an example, the communication interface door 26 for covering the communication interface 18 is provided with a recess thereon, in which the third waterproof structure 44 is received. In one embodiment, the recesses are respectively located adjacent to two ends of the communication interface door 26 contacting with the upper casing portion 32. Specifically, the third waterproof structure 44 is a seal strip, for example being made of plastic and rubbers materials. Preferably, the seal strip is made of silicon rubber. And, the silicon rubber having Rockwell hardness in a range of 40-60, can be used to achieve a better waterproof effect, due to its large deformation amount. The battery door 24 for the battery 22 can be sealed by the same sealing means and structures as those of the communication interface door 26, so as to waterproof it. It can be known from the above description that at least one of the first, second and third waterproof structures 52, 46 and 44 is made from one of the foam cotton, high foam rubber and silicon rubber or any combination thereof. After being sealed by the above waterproof structures, the nuclide identification device 10 of the present embodiment can reach to the IP54 level on terms of waterproof and dustproof design, and thus can be used in various environments.

With reference to Fig. 4, the nuclide identification device in accordance with the present invention is described in detail with respect to shockproof structures thereof.

In order to function to adsorb vibration, each of the respective key components (such as detectors, the battery, the signal amplifier) housed in the lower casing portion 34 is disposed to be received in a separate shock absorption tank. In accordance with the requirements, any number of the shock absorption tanks can be provided. In an embodiment, four shock absorption tanks (i.e., first, second, third and fourth shock absorption tanks 82, 84, 86 and 88) are provided to respectively house the detectors 14, 20, the signal amplifier 16 and the battery 22. Furthermore, in order to further enhance the shock absorption effect, the shock absorption cushion foam cotton can be provided on walls of respective shock absorption tanks. It can be seen from a half sine shock test having a half sine shock peak valve strength up to 15G and shock frequency in a range of 10Hz to 500Hz, that the nuclide identification device 10 having such shockproof structure can meet the requirements of the application environment conditions 7M1 level.

Although the present invention is illustrated in conjunction with the accompanying drawings, the embodiments disclosed by the drawings are intended to exemplify the preferred embodiment of the present invention, rather than construed as a limiting to the present invention.

Although some embodiments of the present general inventive concept have been shown and illustrated, it will be understood by one skilled in the art that various modifications can be made to these embodiments without departing from the spirit or scope of the present general inventive concept, and the scope of the invention will be defined by the accompanying claims and their equivalents.

## Claims

1. A nuclide identification device, **characterized in that**, comprising:
an upper casing portion;
a lower casing portion, detachably combined with the upper casing portion to form a cavity; and
a key circuit portion for performing nuclide identification, housed in the cavity and positioned between the upper casing portion and the lower casing portion,
wherein a gap between the upper casing portion and the lower casing portion is sealed by a first waterproof structure.

2. The nuclide identification device according to claim 1, **characterized in that**, the upper casing portion is provided with an input-output device and a handle, and the lower casing portion comprises a battery, a detector/detectors, a signal amplifier and a battery door for allowing the battery to be replaced.

3. The nuclide identification device according to claim 2, **characterized in that**, the input-output device comprises a display, a switching keyboard, a power switch, a communication interface, a communication interface door for the communication interface and an alarm light.

4. The nuclide identification device according to claim 3, **characterized in that**,
a gap between the upper casing portion and at least one of the input-output device and an handle is sealed by a second waterproof structure, and at least one of a gap between the communication interface door and the upper casing portion and a gap between the battery door and the lower casing portion is sealed by a third waterproof structure.

5. The nuclide identification device according to claim 4, **characterized in that**, at least of the first waterproof structure, the second waterproof structure and the third waterproof structure is made from one of foam cotton, high foam rubber and silicon rubber or any combination thereof.

6. The nuclide identification device according to claim 5, **characterized in that**, the high foam rubber is one of cylindrical closed cell foam ethylene propylene terpolymer and polyethylene foamed cotton, or any combination thereof.

7. The nuclide identification device according to claim 4, **characterized in that**, at least one flange is provided at a position where at least one of the input-output device and the upper casing portion is sealed, or at a position where at least one of the handle and the upper casing portion is sealed.

8. The nuclide identification device according to claim 4, **characterized in that**, a reinforcing device is provided at a connection between the handle and the upper casing device.

9. The nuclide identification device according to claim 8, **characterized in that**, the reinforcing device is a backing plate which is made of metal, stainless steel or plastics.

10. The nuclide identification device according to claim 1, **characterized in that**, the gap between the upper casing portion and the lower casing portion is sealed by an protrusion-slot arrangement, and the first waterproof structure is located in the slot to seal the gap between the protrusion and the slot.

11. The nuclide identification device according to claim 1, **characterized in that**, the lower casing portion is provided with at least one shock absorption tank at its bottom.

12. The nuclide identification device according to claim 11, **characterized in that**, at least one wall of the shock absorption tank is provided with foam cotton.
